# EUROPÄISCHE PATENTANMELDUNG

(11) **EP 4 333 138 A1**
(43) Veröffentlichungstag der Anmeldung: **06.03.2024**
(21) Anmeldenummer: 22193543.0
(22) Anmeldetag: 01.09.2022
(51) Int. Cl.: H01M 10/04

(54) **ENERGIESPEICHERZELLE UND VERFAHREN ZUM HERSTELLEN EINER SOLCHEN ENERGIESPEICHERZELLE**

(71) Anmelder: VARTA Microbattery GmbH, 73479 Ellwangen Jagst (DE)
(72) Erfinder: Elmer, Martin, 73479 Ellwangen (DE); Stock, Stefan, 73492 Rainau-Dalkingen (DE)
(74) Vertreter: Ostertag & Partner Patentanwälte mbB

(57) **Zusammenfassung**

Es wird eine Energiespeicherzelle (100) vorgeschlagen, bei welcher ein freier Randstreifen (109a) eines Kathodenstromkollektors (109) mit einem Kontaktelement (112) einer Deckelbaugruppe (102) verschweißt ist. Weiterhin wird ein Verfahren zur Herstellung solcher Energiespeicherzellen vorgeschlagen.

## Beschreibung

### ANWENDUNGSGEBIET UND STAND DER TECHNIK

Die nachstehend beschriebene Erfindung betrifft eine Energiespeicherzelle und ein Herstellungsverfahren.

Elektrochemische Energiespeicherelemente sind dazu in der Lage, gespeicherte chemische Energie durch eine Redoxreaktion in elektrische Energie umzuwandeln. Die einfachste Form eines elektrochemischen Energiespeicherelements ist die elektrochemische Zelle. Sie umfasst eine positive und eine negative Elektrode, die von einem Separator voneinander getrennt sind. Bei einer Entladung werden an der negativen Elektrode durch einen Oxidationsprozess Elektronen freigesetzt. Hieraus resultiert ein Elektronenstrom, der von einem externen elektrischen Verbraucher abgegriffen werden kann, für den die elektrochemische Zelle als Energielieferant dient. Zugleich kommt es zu einem der Elektrodenreaktion entsprechenden lonenstrom innerhalb der Zelle. Dieser lonenstrom durchquert den Separator und wird durch einen ionenleitenden Elektrolyten ermöglicht.

Wenn die Entladung reversibel ist, also die Möglichkeit besteht, die bei der Entladung erfolgte Umwandlung von chemischer Energie in elektrische Energie wieder umzukehren und die Zelle wieder zu laden, spricht man von einer sekundären Zelle. Die bei sekundären Zellen allgemein übliche Bezeichnung der negativen Elektrode als Anode und die Bezeichnung der positiven Elektrode als Kathode bezieht sich auf die Entladefunktion der elektrochemischen Zelle.

Für viele Anwendungen werden als Energiespeicherelemente heute sekundäre Lithium-Ionen-Zellen eingesetzt, da diese hohe Ströme bereitstellen können und sich durch eine vergleichsweise hohe Energiedichte auszeichnen. Sie basieren auf dem Einsatz von Lithium, welches in Form von Ionen zwischen den Elektroden der Zelle hin und her wandern kann.

Die negative Elektrode und die positive Elektrode einer Lithium-Ionen-Zelle werden in der Regel von sogenannten Kompositelektroden gebildet, die neben elektrochemisch aktiven Komponenten auch elektrochemisch inaktive Komponenten umfassen.

Als elektrochemisch aktive Komponenten (Aktivmaterialien) für sekundäre Lithium-Ionen-Zellen kommen prinzipiell sämtliche Materialien in Frage, die Lithium-Ionen aufnehmen und wieder abgeben können. Für die negative Elektrode werden hierfür beispielsweise Partikel auf Kohlenstoffbasis, wie beispielsweise graphitischer Kohlenstoff, eingesetzt. Als Aktivmaterialien für die positive Elektrode können beispielsweise Lithiumcobaltoxid (LiCoO₂), Lithiummanganoxid (LiMn₂O₄), Lithiumeisenphosphat (LiFePO₄) oder Derivate hiervon eingesetzt werden. Die elektrochemisch aktiven Materialien sind in der Regel in Partikelform in den Elektroden enthalten.

Als elektrochemisch inaktive Komponenten umfassen die Kompositelektroden im Allgemeinen einen flächigen und/oder bandförmigen Stromkollektor, beispielsweise eine metallische Folie, der als Träger für das jeweilige Aktivmaterial dient. Der Stromkollektor für die negative Elektrode (Anodenstromkollektor) kann beispielsweise aus Kupfer oder Nickel und der Stromkollektor für die positive Elektrode (Kathodenstromkollektor) beispielsweise aus Aluminium gebildet sein. Weiterhin können die Elektroden als elektrochemisch inaktive Komponenten einen Elektrodenbinder (z.B. Polyvinylidenfluorid (PVDF) oder ein anderes Polymer, beispielsweise Carboxymethylzellulose), leitfähigkeitsverbessernde Additive und andere Zusätze umfassen. Der Elektrodenbinder gewährleistet die mechanische Stabilität der Elektroden und häufig auch die Haftung des Aktivmaterials auf den Stromkollektoren.

Als Elektrolyten umfassen Lithium-Ionen-Zellen in der Regel Lösungen von Lithiumsalzen wie Lithiumhexafluorophosphat (LiPF₆) in organischen Lösungsmitteln (z.B. Ether und Ester der Kohlensäure).

Die Kompositelektroden werden im Allgemeinen bei der Herstellung einer Lithium-Ionen-Zelle mit einem oder mehreren Separatoren zu einem Elektroden-Separator-Verbund kombiniert. Hierbei werden die Elektroden und Separatoren oft, allerdings keinesfalls zwingend, unter Druck, gegebenenfalls auch durch Lamination oder durch Verklebung, miteinander verbunden. Die grundsätzliche Funktionsfähigkeit der Zelle kann dann durch Tränkung des Verbunds mit dem Elektrolyten hergestellt werden.

In vielen Ausführungsformen wird der Elektroden-Separator-Verbund in Form eines Wickels gebildet oder zu einem Wickel verarbeitet. Im ersten Fall werden beispielsweise eine bandförmige positive Elektrode und eine bandförmige negative Elektrode sowie mindestens ein bandförmiger Separator separat einer Wickelmaschine zugeführt und in dieser zu einem Wickel mit der Sequenz positive Elektrode / Separator / negative Elektrode spiralförmig aufgewickelt. Im zweiten Fall werden eine bandförmige positive Elektrode und eine bandförmige negative Elektrode sowie mindestens ein bandförmiger Separator zunächst zu einem Elektroden-Separator-Verbund kombiniert, beispielsweise unter Anwendung des erwähnten Drucks. In einem weiteren Schritt wird dann der Verbund aufgewickelt.

Für Anwendungen im Automobilbereich, für E-Bikes oder auch für andere Anwendungen mit hohem Energiebedarf wie z.B. in Werkzeugen werden Lithium-Ionen-Zellen mit möglichst hoher Energiedichte benötigt, die gleichzeitig in der Lage sind, mit hohen Strömen beim Laden und Entladen belastet zu werden.

Häufig sind Zellen für die genannten Anwendungen als zylindrische Rundzellen ausgebildet, beispielsweise mit dem Formfaktor 21 x 70 (Durchmesser mal Höhe in mm). Zellen dieser Art umfassen stets einen Verbundkörper in Form eines Wickels. Moderne Lithium-Ionen-Zellen dieses Formfaktors können bereits eine Energiedichte von bis zu 270 Wh/kg erreichen.

In der WO 2017/215900 A1 sind zylindrische Rundzellen beschrieben, bei denen der Elektroden-Separator-Verbund sowie dessen Elektroden bandförmig ausgebildet sind und in Form eines Wickels vorliegen. Die Elektroden weisen jeweils mit Elektrodenmaterial beladene Stromkollektoren auf. Entgegengesetzt gepolte Elektroden sind innerhalb des Elektroden-Separator-Verbunds versetzt zueinander angeordnet, so dass Längsränder der Stromkollektoren der positiven Elektroden an einer Seite und Längsränder der Stromkollektoren der negativen Elektroden an einer weiteren Seite aus dem Wickel austreten. Zur elektrischen Kontaktierung der Stromkollektoren weist die Zelle eine Kontaktplatte auf, die auf einer Stirnseite des Wickels aufsitzt und mit einem Längsrand eines der Stromkollektoren durch Verschweißung verbunden ist. Dadurch ist es möglich, den Stromkollektor und damit auch die dazugehörige Elektrode über seine / ihre gesamte Länge elektrisch zu kontaktieren. Dies senkt den Innenwiderstand innerhalb der beschriebenen Zelle sehr deutlich. Das Auftreten großer Ströme kann in der Folge sehr viel besser abgefangen und auch Wärme kann besser aus dem Wickel abgeführt werden.

### AUFGABE UND LÖSUNG

Ausgehend von diesem Stand der Technik war es wünschenswert, die Energiedichte von Energiespeicherzellen weiter zu erhöhen, insbesondere von Energiespeicherzellen des in der WO 2017/215900 A1 beschriebenen Typs.

Diese Aufgabe wird durch die Energiespeicherzelle mit den Merkmalen des Anspruchs 1 gelöst. Auch das Herstellungsverfahren mit den Merkmalen des Anspruchs 10 ist Gegenstand der Erfindung. Bevorzugte Ausführungsformen der Erfindung finden sich in den abhängigen Ansprüchen.

### Erfindungsgemäße Zelle

Die erfindungsgemäße Energiespeicherzelle weist stets die unmittelbar folgenden Merkmale a. bis l. auf:
a. Die Zelle umfasst einen Elektroden-Separator-Verbund mit der Sequenz Anode / Separator / Kathode.
b. Die Anode des Elektroden-Separator-Verbunds ist bandförmig ausgebildet und umfasst einen bandförmigen Anodenstromkollektor, der einen ersten Längsrand und einen dazu parallelen zweiten Längsrand aufweist.
c. Der bandförmige Anodenstromkollektor umfasst einen Hauptbereich, der mit einer Schicht aus einem negativen Elektrodenmaterial beladen ist, sowie einen freien Randstreifen, der sich entlang seines ersten Längsrands erstreckt und der nicht mit dem negativen Elektrodenmaterial beladen ist.
d. Die Kathode des Elektroden-Separator-Verbunds ist bandförmig ausgebildet und umfasst einen bandförmigen Kathodenstromkollektor, der einen ersten Längsrand und einen dazu parallelen zweiten Längsrand aufweist.
e. Der bandförmige Kathodenstromkollektor umfasst einen Hauptbereich, der mit einer Schicht aus einem positiven Elektrodenmaterial beladen ist, sowie einen freien Randstreifen, der sich entlang seines ersten Längsrands erstreckt und der nicht mit dem positiven Elektrodenmaterial beladen ist.
f. Der Elektroden-Separator-Verbund liegt in Form eines zylindrischen Wickels mit einer ersten endständigen Stirnseite und einer zweiten endständigen Stirnseite und einem dazwischen liegenden Wickelmantel vor und umfasst die Anode und die Kathode in spiralförmig aufgewickelter Form.
g. Die bandförmigen Elektroden sind innerhalb des als Wickel ausgebildeten Elektroden-Separator-Verbunds derart ausgebildet und/oder angeordnet, dass der freie Randstreifen des Anodenstromkollektors oder der freie Randstreifen des Kathodenstromkollektors aus der ersten endständigen Stirnseite austritt.
h. Die Zelle umfasst ein luft- und flüssigkeitsdicht verschlossenes Gehäuse, das einen Innenraum umschließt, in dem der Elektroden-Separator-Verbund angeordnet ist, und das einen metallischen Gehäusebecher mit einer endständigen kreisförmigen Öffnung und eine Deckelbaugruppe mit einem kreisförmigen Rand, welche die kreisförmige Öffnung verschließt, aufweist.
i. Die Deckelbaugruppe umfasst eine ringförmige Dichtung aus einem elektrisch isolierenden Material, die ihren kreisförmigen Rand umschließt.
j. Der Gehäusebecher umfasst in axialer Abfolge einen Boden, einen Zentralabschnitt und einen Verschlussabschnitt, wobei
   - der Zentralabschnitt zylindrisch ausgebildet ist und in dem Zentralabschnitt der Wickelmantel des als Wickel ausgebildeten Elektroden-Separator-Verbunds mit der Innenseite des Gehäusebechers in Kontakt steht, und
   - in dem Verschlussabschnitt die ringförmige Dichtung in einem Presskontakt mit der Deckelbaugruppe und der Innenseite des Gehäusebechers steht.
k. Die Deckelbaugruppe umfasst von innen nach außen ein metallisches Kontaktelement, eine metallische Membran, die mit dem metallischen Kontaktelement elektrisch gekoppelt ist und die sich ab einem definierten Überdruck innerhalb des Gehäuses nach außen wölbt oder birst, sowie eine metallische Polkappe, die mit der metallischen Membran elektrisch gekoppelt ist.

Besonders zeichnet sich die erfindungsgemäße Energiespeicherzelle dadurch aus, dass
I. der aus der ersten endständigen Stirnseite des Elektroden-Separator-Verbunds austretende freie Randstreifen mit dem Kontaktelement der Deckelbaugruppe verschweißt ist.

Bei dem aus der ersten endständigen Stirnseite austretenden freien Randstreifen kann es sich um den freien Randstreifen des Kathodenstromkollektors oder um den freien Randstreifen des Anodenstromkollektors handeln. Bevorzugt handelt es sich um den freien Randstreifen des Kathodenstromkollektors.

Anders als bei der WO 2017/215900 A1 weist die erfindungsgemäße Energiespeicherzelle ein Kontaktelement auf, das Teil einer Deckelbaugruppe ist. Es bedarf entsprechend keines gesonderten elektrischen Leiters zwischen einem Deckel und einem Kontaktelement. Die erfindungsgemäße Energiespeicherzelle ist daher einfach herzustellen. Das Fehlen des gesonderten Ableiters hat auch zur Folge, dass der Innenwiderstand der Energiespeicherzelle abgesenkt werden kann und dass im Gehäuse mehr nutzbares Volumen zur Verfügung steht, wodurch zur Steigerung der Energiedichte mehr Aktivmaterial in das Gehäuse eingebracht werden kann.

### Anbindung einer der Elektroden an den Gehäusebecher

Während eine der Elektroden des erfindungsgemäßen Energiespeicherelements über den aus der ersten endständigen Stirnseite austretenden freien Randstreifen elektrisch mit der Deckelbaugruppe gekoppelt ist, ist die andere der Elektroden bevorzugt elektrisch mit dem Gehäusebecher gekoppelt. Das erfindungsgemäße Energiespeicherelement zeichnet sich entsprechend bevorzugt durch mindestens eines der unmittelbar folgenden Merkmale aus:
a. Die bandförmigen Elektroden sind innerhalb des als Wickel ausgebildeten Elektroden-Separator-Verbunds derart ausgebildet und/oder angeordnet, dass einer der freien Randstreifen von Anodenstromkollektor und Kathodenstromkollektor aus der ersten endständigen Stirnseite und der andere der freien Randstreifen aus der zweiten endständigen Stirnseite des Elektroden-Separator-Verbunds austritt.
b. Der aus der zweiten endständigen Stirnseite des Elektroden-Separator-Verbunds austretende andere der freien Randstreifen ist mit dem Boden des Gehäusebechers elektrisch gekoppelt.

Auch hier gilt, dass es sich bei dem aus der ersten endständigen Stirnseite austretenden freien Randstreifen bevorzugt um den freien Randstreifen des Kathodenstromkollektors handelt. Entsprechend handelt es sich bei dem aus der zweiten endständigen Stirnseite austretenden Randstreifen bevorzugt um den freien Randstreifen des Anodenstromkollektors.

Besonders bevorzugt ist der aus der zweiten endständigen Stirnseite austretende freie Randstreifen mit dem Boden der Gehäusebechers verschweißt.

Alternativ kann der Randstreifen aber auch über einen gesonderten elektrischen Leiter, beispielsweise einen plattenförmigen Leiter, mit dem Boden des Gehäusebechers elektrisch gekoppelt sein. Dieser gesonderte elektrische Leiter kann beispielsweise aus Nickel oder Kupfer oder Titan oder einer Nickel- oder Kupfer- oder Titanlegierung oder Edelstahl, beispielsweise vom Typ 1.4303 oder 1.4404 oder vom Typ SUS304, oder aus nickelplattiertem Kupfer, bestehen, insbesondere, wenn es sich bei dem aus der zweiten endständigen Stirnseite austretenden Randstreifen um den freien Randstreifen des Anodenstromkollektors handelt.

### Bevorzugter Aufbau der Deckelbaugruppe

Die Deckelbaugruppe wird in aller Regel vormontiert verbaut. Sie zeichnet sich in bevorzugten Ausführungsformen durch mindestens eines der unmittelbar folgenden Merkmale a. bis f. aus:
a. Die Membran steht in unmittelbarem Kontakt mit dem Kontaktelement und ist mit diesem durch Verschweißung verbunden.
b. Die Membran ist kreisförmig ausgebildet und weist somit einen kreisförmigen Rand auf.
c. Das Kontaktelement ist kreisförmig ausgebildet und weist somit einen kreisförmigen Rand auf.
d. Das Kontaktelement ist an das Zentrum der Membran geschweißt.
e. Das Kontaktelement und die Membran weisen näherungsweise den gleichen Durchmesser auf.
f. Die Membran und das Kontaktelement stehen ausschließlich über einen Verschweißungsbereich im Zentrum der Membran miteinander in elektrischem Kontakt.

Es ist bevorzugt, dass die unmittelbar vorstehenden Merkmale a. und b. und d. und f. in Kombination realisiert sind. Bevorzugt sind alle sechs unmittelbar vorstehenden Merkmale a. bis f. in Kombination realisiert.

Bevorzugt steht die Membran in unmittelbarem Kontakt mit der Polkappe. In besonders bevorzugten Ausführungsformen ist die Membran mit der Polkappe durch Verschweißung verbunden.

Bevorzugt schließt die Polkappe die Deckelbaugruppe nach außen hin ab.

In weiteren bevorzugten Ausführungsformen zeichnet sich die Deckelbaugruppe durch mindestens eines der unmittelbar folgenden Merkmale a. bis f. aus:
a. Die ringförmige Dichtung umschließt den kreisförmigen Rand des metallischen Kontaktelements.
b. Die ringförmige Dichtung umschließt den kreisförmigen Rand der metallischen Membran.
c. Die ringförmige Dichtung trennt den kreisförmigen Rand der metallischen Membran vom kreisförmigen Rand des metallischen Kontaktelements.

Es ist bevorzugt, dass die unmittelbar vorstehenden Merkmale a. und b. und c. in Kombination realisiert sind.

In bevorzugten Ausführungsformen der erfindungsgemäßen Energiespeicherzelle kommen der ringförmigen Dichtung mehrere Funktionen zu. Zum einen trennt sie die Deckelbaugruppe elektrisch vom metallischen Gehäusebecher und dichtet das Gehäuse gleichzeitig ab. Zum anderen trennt sie das metallische Kontaktelement elektrisch von der metallischen Membran. Zu diesem Zweck kann sie beispielsweise eine F- oder E-förmigen Querschnitt aufweisen, wie das noch anhand der Zeichnungen erläutert wird.

### Bevorzugte Ausbildung des aus der ersten endständigen Stirnseite austretenden freien Randstreifens

Bevorzugt zeichnet sich die erfindungsgemäße Energiespeicherzelle durch mindestens eines der unmittelbar nachfolgenden Merkmale a. und b. aus:
a. Der Zentralabschnitt und der Verschlussabschnitt werden durch eine radiale Einbuchtung, die die Außenseite des Gehäusebechers ringförmig umläuft, voneinander getrennt.
b. Der aus der ersten endständigen Stirnseite austretende freie Randstreifen ist breiter als der Abstand d zwischen dem Zentralabschnitt und dem Verschlussabschnitt, so dass der Randstreifen den Abstand d überbrückt und in unmittelbarem Kontakt mit dem Kontaktelement steht.
c. Der Abstand d wird durch eine Oberkante und eine Unterkante der Einbuchtung des Gehäusebechers definiert.

Es ist bevorzugt, dass die unmittelbar vorstehenden Merkmale a. und b., bevorzugt die unmittelbar vorstehenden Merkmale a. bis c., in Kombination realisiert sind.

Besonders bevorzugt zeichnet sich die erfindungsgemäße Energiespeicherzelle durch mindestens eines der unmittelbar folgenden Merkmale a. und b. aus:
a. Der Gehäusebecher weist in dem Zentralabschnitt und dem Verschlussabschnitt einen identischen maximalen Außendurchmesser auf.
b. Im Bereich der Einbuchtung ist der Außendurchmesser des Gehäusebechers um das 4- bis 20-fache der Wandstärke des Gehäusebechers in diesem Bereich reduziert.

Es ist bevorzugt, dass die unmittelbar vorstehenden Merkmale a. und b. in Kombination realisiert sind.

In Übereinstimmung mit den vorstehenden Ausführungsformen umfasst der Gehäusebecher zwischen dem Zentralabschnitt und dem Verschlussabschnitt einen Einbuchtungsabschnitt, in dem in axialer Richtung der Durchmesser des Gehäusebechers von einem maximalen Wert absinkt auf ein Minimum und dann wieder ansteigt auf den maximalen Wert.

Bevorzugt zeichnet sich die erfindungsgemäße Energiespeicherzelle durch mindestens eines der unmittelbar nachfolgenden Merkmale a. und b. aus:
a. Der aus der ersten endständigen Stirnseite des Elektroden-Separator-Verbunds austretende freie Randstreifen ist im Bereich der Einbuchtung des Gehäusebechers zur Mitte des Gehäusebechers hin nach innen gedrückt.
b. Im Bereich der Einbuchtung ist zwischen der Innenseite des Gehäusebechers und dem freien Randstreifen ein elektrisch isolierendes Material angeordnet, das den freien Randstreifen vom elektrischen Potential des Gehäusebechers elektrisch isoliert.

Es ist bevorzugt, dass die unmittelbar vorstehenden Merkmale a. und b. in Kombination realisiert sind.

### Bevorzugte Gehäuseform

Bei der erfindungsgemäßen Energiespeicherzelle handelt es sich bevorzugt um eine zylindrische Rundzelle. Zylindrische Rundzellen weisen bekanntlich ein zylindrisches Gehäuse mit einem in der Regel kreisrunden Boden auf.

Der Gehäusebecher der erfindungsgemäßen Energiespeicherzelle wird meist durch Tiefziehen gebildet. Es ist aber auch möglich, den Becher durch Einschweißen eines Bodens in ein rohrförmiges Halbteil zu bilden.

Bevorzugt liegt die Höhe der als zylindrische Rundzelle ausgebildeten erfindungsgemäßen Energiespeicherzelle im Bereich von 50 mm bis 150 mm. Ihr Durchmesser liegt bevorzugt im Bereich von 15 mm bis 60 mm. Zylindrische Rundzellen mit diesen Formfaktoren eignen sich insbesondere zur Stromversorgung elektrischer Antriebe von Kraftfahrzeugen.

Wie oben ausgeführt, steht bei einer erfindungsgemäßen Zelle der Wickelmantel des als Wickel ausgebildeten Elektroden-Separator-Verbunds in dem Zentralabschnitt mit der Innenseite des Gehäusebechers in Kontakt. Besonders bevorzugt liegt er unmittelbar an der Innenseite des Gehäusebechers an. In einigen Ausführungsformen kann es vorgesehen sein, die Innenseite, beispielsweise mittels einer Folie, elektrisch zu isolieren. In diesem Fall steht der Wickelmantel des Elektroden-Separator-Verbunds mit der mit der Folie ausgekleideten Innenseite des Gehäusebechers in Kontakt bzw. liegt an ihr an.

Besonders bevorzugt weist der Gehäusebecher in dem Verschlussabschnitt einen die kreisförmige Öffnung definierenden Öffnungsrand auf, der radial nach innen über den von der Dichtung umschlossenen Rand der Deckelbaugruppe umgebogen ist und der die Deckelbaugruppe einschließlich der Dichtung in der kreisförmigen Öffnung des Gehäusebechers formschlüssig fixiert.

Bevorzugt liegt die ringförmige Dichtung in dem Verschlussabschnitt komprimiert vor. Sie wird bevorzugt von der Innenseite des Gehäusebechers gegen den Rand der Deckelbaugruppe gepresst.

### Bevorzugte materielle Beschaffenheit von Stromkollektoren, Gehäusebecher und Deckelbaugruppe

Die Stromkollektoren der erfindungsgemäßen Energiespeicherzelle dienen dazu, im jeweiligen Elektrodenmaterial enthaltene elektrochemisch aktive Komponenten möglichst großflächig elektrisch zu kontaktieren. Bevorzugt bestehen die Stromkollektoren aus einem Metall oder sind zumindest oberflächlich metallisiert.

Im Falle einer als Lithium-Ionen-Zelle ausgebildeten erfindungsgemäßen Energiespeicherzelle eignen sich als Metall für den Anodenstromkollektor beispielsweise Kupfer oder Nickel oder auch andere elektrisch leitfähige Materialien, insbesondere Kupfer- und Nickellegierungen oder mit Nickel beschichtete Metalle. Als Kupferlegierung können insbesondere Werkstoffe vom Typ EN CW-004A bzw. EN CW-008A mit einem Kupferanteil von mindestens 99,9% eingesetzt werden. Als Nickellegierungen kommen insbesondere Legierungen vom Typ NiFe, NiCu, CuNi, NiCr und NiCrFe in Frage. Auch Edelstahl kommt grundsätzlich in Frage, beispielsweise vom Typ 1.4303 oder 1.4404 oder vom Typ SUS304.

Als Metall für den Kathodenstromkollektor eignen sich im Falle einer als Lithium-Ionen-Zelle ausgebildeten erfindungsgemäßen Energiespeicherzelle insbesondere Aluminium oder auch andere elektrisch leitfähige Materialien, darunter auch Aluminiumlegierungen.

Geeignete Aluminiumlegierungen für den Kathodenstromkollektor sind beispielsweise Al-Legierungen vom Typ 1235, 1050, 1060, 1070, 3003, 5052, Mg3, Mg212 (Serie 3000) und GM55. Weiterhin geeignet sind AISi, AlCuTi, AlMgSi, AlSiMg, AlSiCu, AlCuTiMg und AlMg. Der Aluminiumanteil besagter Legierungen liegt bevorzugt oberhalb von 99,5 %.

Bevorzugt handelt es sich bei dem Anodenstromkollektor und/oder dem Kathodenstromkollektor jeweils um eine bandförmige Metallfolie mit einer Dicke im Bereich von 4 µm bis 30 µm.

Neben Folien können als Stromkollektoren allerdings auch andere bandförmige Substrate wie metallische oder metallisierte Vliese oder offenporige metallische Schäume oder Streckmetalle verwendet werden.

Die Stromkollektoren sind bevorzugt beidseitig mit dem jeweiligen Elektrodenmaterial beladen.

Der Gehäusebecher besteht bevorzugt aus Aluminium, einer Aluminiumlegierung oder einem Stahlblech, beispielsweise einem vernickelten Stahlblech. Geeignete Aluminiumlegierungen für den Gehäusebecher sind beispielsweise AI-Legierungen vom Typ 1235, 1050, 1060, 1070, 3003, 5052, Mg3, Mg212 (Serie 3000) und GM55. Weiterhin geeignet sind AISi, AlCuTi, AlMgSi, AlSiMg, AlSiCu, AlCuTiMg und AlMg. Der Aluminiumanteil besagter Legierungen liegt bevorzugt oberhalb von 99,5 %.

Die Beschaffenheit der metallischen Komponenten der Deckelbaugruppe hängt häufig davon ab, ob es sich bei dem aus der ersten endständigen Stirnseite austretenden freien Randstreifen um den freien Randstreifen des Kathodenstromkollektors oder um den freien Randstreifen des Anodenstromkollektors handelt.

Wenn es sich bei dem aus der ersten endständigen Stirnseite austretenden freien Randstreifen um den freien Randstreifen des Kathodenstromkollektors handelt, ist es bevorzugt, dass das metallische Kontaktelement sowie vorzugsweise auch die metallische Membran aus einem gleichen oder chemisch ähnlichen Material wie der Kathodenstromkollektor, also insbesondere aus Aluminium oder einer Aluminiumlegierung, gefertigt sind.

Wenn es sich bei dem aus der ersten endständigen Stirnseite austretenden freien Randstreifen um den freien Randstreifen des Anodenstromkollektors handelt, ist es bevorzugt, dass das metallische Kontaktelement sowie vorzugsweise auch die metallische Membran aus einem gleichen oder chemisch ähnlichen Material wie der Anodenstromkollektor, also insbesondere aus Kupfer oder Nickel oder einer Kupfer- oder Nickellegierung oder Edelstahl, gefertigt sind.

Der Poldeckel besteht beispielsweise aus vernickeltem Stahl oder aus Aluminium oder einer Aluminiumlegierung.

Die ringförmige Dichtung besteht bevorzugt aus einem elektrisch isolierenden Kunststoffmaterial, das einen Schmelzpunkt >200 °C, bevorzugt > 300 °C, aufweist. Bei dem Kunststoffmaterial handelt es sich um ein Polyetheretherketon (PEEK), ein Polyimid (PI), ein Polyphenylensulfid (PPS) oder ein Polytetrafluorethylen (PTFE).

### Elektroden und Elektrodenmaterialien

In einer besonders bevorzugten Ausführungsform ist die erfindungsgemäße Energiespeicherzelle eine Lithium-Ionen-Zelle.

Für die Elektroden der Energiespeicherzelle können im Grunde sämtliche für sekundäre Lithium-Ionen-Zellen bekannte Elektrodenmaterialien verwendet werden.

In den Anoden können als Aktivmaterialien Partikel auf Kohlenstoffbasis wie graphitischer Kohlenstoff oder zur Interkalation von Lithium befähigte, nicht-graphitische Kohlenstoffmaterialien, bevorzugt ebenfalls in Partikelform, eingesetzt werden. Alternativ oder zusätzlich kann auch Lithiumtitanat (Li₄Ti₅O₁₂) oder ein Derivat desselben in der Anode enthalten sein, bevorzugt ebenfalls in Partikelform. Weiterhin kann die Anode als Aktivmaterial mindestens ein Material aus der Gruppe mit Silizium, Aluminium, Zinn, Antimon oder eine Verbindung oder Legierung dieser Materialien, die Lithium reversibel ein- und auslagern kann, beispielsweise Siliziumoxid (insbesondere SiOₓ mit 0 < x < 2), enthalten, gegebenenfalls in Kombination mit Aktivmaterialien auf Kohlenstoffbasis. Zinn, Aluminium, Antimon und Silizium sind dazu in der Lage, mit Lithium intermetallische Phasen zu bilden. Die Kapazität zur Aufnahme von Lithium übersteigt dabei, insbesondere im Fall von Silizium, die von Graphit oder vergleichbaren Materialien um ein Vielfaches. Oft werden Mischungen aus Silizium- und Kohlenstoff-basierten Speichermaterialien eingesetzt. Weiterhin eignen sich auch dünne Anoden aus metallischem Lithium.

Für die Kathoden kommen als Aktivmaterialien beispielsweise Lithium-Metalloxid-Verbindungen und Lithium-Metallphosphat-Verbindungen wie LiCoO₂ und LiFePO₄ in Frage. Weiterhin gut geeignet sind insbesondere Lithiumnickelmangancobaltoxid (NMC) mit der Summenformel Li-NiₓMn_{y}Co_{z}O₂ (wobei x + y + z typischerweise 1 ist), Lithiummanganspinell (LMO) mit der Summenformel LiMn₂O₄, oder Lithiumnickelcobaltaluminiumoxid (NCA) mit der Summenformel LiNiₓCo-_{y}Al_{z}O₂ (wobei x + y + z typischerweise 1 ist). Auch Derivate hiervon, beispielsweise Lithiumnickelmangancobaltaluminiumoxid (NMCA) mit der Summenformel Li_{1.11}(Ni_{0.40}Mn_{0.39}Co_{0.16}Al_{0.05})_{0.89}O₂ oder Li₁₊ₓM-O-Verbindungen und/oder Mischungen der genannten Materialien können eingesetzt werden. Auch die kathodischen Aktivmaterialien werden bevorzugt partikulär eingesetzt.

Daneben enthalten die Elektroden einer erfindungsgemäßen Energiespeicherzelle bevorzugt einen Elektrodenbinder und/oder ein Additiv zur Verbesserung der elektrischen Leitfähigkeit. Die Aktivmaterialien sind bevorzugt in eine Matrix aus dem Elektrodenbinder eingebettet, wobei benachbarte Partikel in der Matrix bevorzugt in unmittelbarem Kontakt stehen. Leitmittel dienen dazu, die elektrische Leitfähigkeit der Elektroden zu erhöhen. Übliche Elektrodenbinder basieren beispielsweise auf Polyvinylidenfluorid (PVDF), (Li-)Polyacrylat, Styrol-Butadien-Kautschuk oder Carboxymethylzellulose oder auch Mischungen unterschiedlicher Binder. Übliche Leitmittel sind Ruß, feine Graphite, Kohlenstofffasern, Carbon-Nanotubes und Metallpulver.

### Bevorzugte materielle Ausführungsformen von Elektrolyt und Separator

Die erfindungsgemäße Energiespeicherzelle umfasst bevorzugt einen flüssigen Elektrolyten, im Falle einer Lithium-Ionen-Zelle insbesondere einen Elektrolyten auf der Basis mindestens eines Lithiumsalzes wie beispielsweise Lithiumhexafluorophosphat (LiPF₆), das in einem organischen Lösungsmittel gelöst vorliegt (z.B. in einer Mischung organischer Carbonate oder einem cyclischen Ether wie THF oder einem Nitril). Andere einsetzbare Lithiumsalze sind beispielsweise Lithiumtetrafluoroborat (LiBF₄), Lithiumbis(trifluoromethansulfonyl)imid (LiTFSI), Lithiumbis(fluorosulfonyl)imid (LiFSI) und Lithiumbis(oxalato)borat (LiBOB).

Der Separator eines Elektroden-Separator-Verbunds der erfindungsgemäßen Energiespeicherzelle ist wie die Elektroden bevorzugt bandförmig ausgebildet. Gegenebenfalls umfasst der Elektroden-Separator-Verbunds der erfindungsgemäßen Energiespeicherzelle mehr als einen bandförmigen Separator. So kann es beispielsweise bevorzugt sein, dass die bandförmige Anode oder die bandförmige Kathode zwischen zwei bandförmigen Separatoren angeordnet ist.

Der Separator wird bevorzugt aus einer elektrisch isolierenden Kunststofffolie gebildet. Er weist bevorzugt Poren auf, so dass er von dem flüssigen Elektrolyten durchdrungen werden kann. Die Kunststofffolie kann beispielsweise aus einem Polyolefin oder aus einem Polyetherketon bestehen. Auch Vliese und Gewebe aus Kunststoffmaterialien oder andere elektrisch isolierende Flächengebilde können als Separator zum Einsatz kommen. Bevorzugt werden Separatoren eingesetzt, die eine Dicke im Bereich 10 von 5 µm bis 50 µm aufweisen.

Es ist allerdings auch möglich, dass es sich bei dem bandförmigen Separator um einen Separator aus einem Festkörperelektrolyten, der eine intrinsische lonenleitfähigkeit aufweist und nicht mit einem flüssigen Elektrolyten getränkt werden muss, handelt. Bei dem Festkörperelektrolyt kann es sich beispielsweise um einen Polymerfestkörperelektrolyten basierend auf einem Polymer-Leitsalzkomplex, der einphasig ohne jegliche Flüssigkomponente vorliegt, handeln. Als Polymermatrix kann ein Polymerfestkörperelektrolyt Polyacrylsäure (PAA), Polyethylenglycol (PEG) oder Polymethylmethacrylat (PMMA) aufweisen. In diesen können Lithium-Leitsalze wie beispielsweise Lithium-bis-(trifluoromethan)sulfonylimid (LiTFSI), Lithiumhexafluorophosphat (LiPF₆) und Lithiumtetrafluoroborat (LiBF₄) vorliegen.

### Bevorzugte Formen und Dimensionen von Elektroden und Separator

Der Anodenstromkollektor, der Kathodenstromkollektor und der Separator oder die Separatoren der erfindungsgemäßen Zelle weisen bevorzugt jeweils die folgenden Dimensionen auf:
- Eine Länge im Bereich von 0,5 m bis 25 m,
- Eine Breite im Bereich 40 mm bis 145 mm.

In dem als Wickel ausgebildeten Elektroden-Separator-Verbund liegen die bandförmige Anode, die bandförmige Kathode und der oder die bandförmigen Separatoren bevorzugt spiralförmig aufgewickelt vor. Zur Herstellung des Elektroden-Separator-Verbunds werden die bandförmigen Elektroden bevorzugt gemeinsam mit dem oder den bandförmigen Separatoren einer Wickelvorrichtung zugeführt und in dieser bevorzugt um eine Wickelachse herum spiralförmig aufgewickelt. In einigen Ausführungsformen werden die Elektroden und der Separator hierzu auf einen zylindrischen oder hohlzylindrischen Wickelkern aufgewickelt, der auf einem Wickeldorn sitzt und nach dem Wickeln im Wickel verbleibt.

Der Wickelmantel kann beispielsweise durch eine Kunststofffolie oder ein Klebeband gebildet sein. Es ist auch möglich, dass der Wickelmantel durch eine oder mehrere Separatorwindungen gebildet ist.

Es ist bevorzugt, dass die Längsränder des oder der Separatoren die Stirnseiten des als Wickel ausgebildeten Elektroden-Separator-Verbunds bilden.

Es ist weiterhin bevorzugt, dass der aus der ersten endständigen Stirnseite des Elektroden-Separator-Verbunds austretende freie Randstreifen des Anodenstromkollektors oder des Kathodenstromkollektors einen maximalen Überstand im Bereich von 10 mm bis 15 mm, vorzugsweise von 5 mm bis 15 mm, weiter bevorzugt von 5 mm bis 10 mm, weiter bevorzugt von 3 mm bis 10 mm, besonders bevorzugt von 3 mm bis 8 mm, aufweist. Dieser Überstand entspricht näherungsweise der Breite des Randstreifend sowie dem Abstand *d* zwischen dem Zentralabschnitt und dem Verschlussabschnitt.

Es ist weiterhin bevorzugt, dass der aus der zweiten endständigen Stirnseite des Elektroden-Separator-Verbunds austretende freie Randstreifen des Anodenstromkollektors oder des Kathodenstromkollektors einen maximalen Überstand im Bereich von 1 mm bis 5 mm aufweist.

Bevorzugt sind die bandförmige Anode und die bandförmige Kathode innerhalb des Elektroden-Separator-Verbunds versetzt zueinander angeordnet, um zu gewährleisten, dass der freie Randstreifen des Anodenstromkollektors aus einer der endständigen Stirnseiten und der freie Randstreifen des Kathodenstromkollektors aus der anderen der endständigen Stirnseiten austritt.

### Bevorzugte Nennkapazität der Energiespeicherzelle

Die Nennkapazität einer als zylindrische Rundzelle ausgebildeten erfindungsgemäßen Energiespeicherzelle auf Lithium-Ionen-Basis beträgt bevorzugt bis zu 15000 mAh. Mit dem Formfaktor von 21 x 70 hat die Energiespeicherzelle in einer Ausführungsform als Lithium-Ionen-Zelle bevorzugt eine Nennkapazität im Bereich von 1500 mAh bis 7000 mAh, besonders bevorzugt im Bereich von 3000 bis 5500 mAh. Mit dem Formfaktor von 18 x 65 hat die Zelle in einer Ausführungsform als Lithium-Ionen-Zelle bevorzugt eine Nennkapazität im Bereich von 1000 mAh bis 5000 mAh, besonders bevorzugt im Bereich von 2000 bis 4000 mAh.

In der Europäischen Union sind Herstellerangaben zu Angaben betreffend die Nennkapazitäten von sekundären Batterien streng reglementiert. So haben etwa Angaben zur Nennkapazität von sekundären Nickel-Cadmium-Batterien auf Messungen gemäß den Normen IEC/EN 61951-1 und IEC/EN 60622, Angaben zur Nennkapazität von sekundären Nickel-Metallhydrid-Batterien auf Messungen gemäß der Norm IEC/EN 61951-2, Angaben zur Nennkapazität von sekundären Lithium-Batterien auf Messungen gemäß der Norm IEC/EN 61960 und Angaben zur Nennkapazität von sekundären Blei-Säure-Batterien auf Messungen gemäß der Norm IEC/EN 61056-1 zu basieren. Jegliche Angaben zu Nennkapazitäten in der vorliegenden Anmeldung basieren bevorzugt ebenfalls auf diesen Normen.

### Bevorzugte Ausführungsform des Kontaktelements

Eine möglichst großflächige Abdeckung der Stirnseiten des Elektroden-Separator-Verbunds und damit gute Anbindung der Stromkollektoren ist für die Strombelastbarkeit und das thermische Management der erfindungsgemäßen Energiespeicherzelle von Bedeutung. Je größer die Abdeckung ist, desto eher ist es möglich, den Längsrand des jeweiligen Stromkollektors möglichst über seine gesamte Länge zu kontaktieren. Im Elektroden-Separator-Verbund beim Laden oder Entladen gebildete Wärme kann so gut über das Kontaktelement bzw. den Boden des Gehäusebechers abgeführt werden.

Bevorzugt zeichnet sich die erfindungsgemäße Energiespeicherzelle durch mindestens eines der unmittelbar folgenden Merkmale a. bis h. aus:
a. Der Längsrand entlang dem sich der aus der ersten endständigen Stirnseite des Elektroden-Separator-Verbunds austretende freie Randstreifen erstreckt, bildet eine Fläche, auf der das Kontaktelement flach aufliegt oder in die das Kontaktelement eingepresst ist.
b. Das Kontaktelement ist derart dimensioniert, dass es mindestens 40 %, bevorzugt mindestens 60 %, besonders bevorzugt mindestens 80 % der ersten endständigen Stirnseite abdeckt.
c. Das Kontaktelement ist eine Scheibe oder eine polygonale Platte.
d. Das Kontaktelement weist mindestens eine Durchbrechung, insbesondere mindestens ein Loch und/oder mindestens einen Schlitz, auf.
e. Das Kontaktelement weist eine bevorzugt gleichmäßige Dicke im Bereich von 50 µm bis 600 µm, bevorzugt im Bereich von 150 µm bis 350 µm, auf.
f. Das Kontaktelement weist zwei sich gegenüberliegende Flachseiten auf und erstreckt sich im Wesentlichen nur in einer Dimension.
g. Das Kontaktelement weist mindestens eine Sicke auf, die auf einer Flachseite des Kontaktelements als längliche Vertiefung und auf der gegenüberliegenden Flachseite als längliche Erhöhung zu Tage tritt, wobei das Kontaktelement mit der Flachseite, welche die längliche Erhöhung trägt, in die Fläche, die von dem Längsrand gebildet wird, eingepresst ist.
h. Das Kontaktelement ist im Bereich der Sicke mit dem Längsrand des jeweiligen Stromkollektors verschweißt, insbesondere über eine oder mehrere in der Sicke angeordnete Schweißnähte.

Es ist besonders bevorzugt, dass die unmittelbar vorstehenden Merkmale a. bis d. in Kombination miteinander realisiert sind. Besonders bevorzugt sind alle Merkmale a. bis h. in Kombination miteinander realisiert.

Es hat sich in einigen Ausführungsformen als vorteilhaft erwiesen, den Längsrand des Stromkollektors, der aus der ersten Stirnseite austritt, einer Vorbehandlung zu unterziehen, bevor das Kontaktelement aufgesetzt wird. Insbesondere kann in den Längsrand mindestens eine Vertiefung eingefalzt werden, die zu der erwähnten mindestens einen Sicke bzw. der länglichen Erhöhung auf der der ersten endständigen Stirnseite zugewandten Flachseite des Kontaktelements korrespondiert.

Der Längsrand des Stromkollektors kann auch durch eine Vorbehandlung einer gerichteten Umformung unterzogen worden sein. Beispielsweise kann er in eine definierte Richtung umgebogen sein.

Die mindestens eine Durchbrechung in dem Kontaktelement kann beispielsweise zweckmäßig sein, um den Elektroden-Separator-Verbund mit einem Elektrolyten tränken zu können. Des Weiteren kann im Innenraum der Zelle entstehender Druck durch die Durchbrechung auf die Membran wirken.

### Bevorzugte Ausführungsform der Polkappe

Bevorzugt zeichnet sich die erfindungsgemäße Energiespeicherzelle durch das unmittelbar nachfolgende Merkmal a. aus:
a. In der Mitte und/oder am Rand der Polkappe ist eine oder sind mehrere Öffnungen ausgebildet.

### Herstellungsverfahren

Das erfindungsgemäße Verfahren dient zur Herstellung einer Energiespeicherzelle, die ein luft- und flüssigkeitsdicht verschlossenes Gehäuse umfasst, das einen Innenraum umschließt, in dem ein Elektroden-Separator-Verbund angeordnet ist, wie er oben beschrieben wurde, wobei das Gehäuse einen metallischen Gehäusebecher mit einer endständigen kreisförmigen Öffnung und eine Deckelbaugruppe mit einem kreisförmigen Rand, welche die kreisförmige Öffnung verschließt, umfasst. Bezüglich bevorzugter Eigenschaften des Gehäuses und der Deckelbaugruppe wird auf obige Ausführungen verwiesen.

In bevorzugten Ausführungsformen dient das Verfahren zur Herstellung der oben beschriebenen Energiespeicherzelle.

Das Verfahren zeichnet sich durch die unmittelbar folgenden Schritte a. bis e. aus:
a. Es werden ein Gehäusebecher mit einer kreisförmigen Öffnung und ein Elektroden-Separator-Verbund mit einer ersten und einer zweiten Stirnseite, wie in Anspruch 1 definiert, bereitgestellt.
b. Der Elektroden-Separator-Verbund wird, mit der zweiten Stirnseite voran, durch die kreisförmige Öffnung des Gehäusebechers in den Gehäusebecher eingeschoben.
c. **Vor oder nach Schritt b.** wird auf der ersten Stirnseite ein metallisches Kontaktelement, insbesondere das oben beschriebene Kontaktelement, angeordnet und durch Verschweißung fixiert.
d. Zur Bildung der Deckelbaugruppe werden, **vor oder nach Schritt b.,** auf das Kontaktelement eine Membran und eine Polkappe, insbesondere die oben beschriebene Membran und Polkappe, nacheinander oder als vormontierte Baugruppe aufgesetzt.
e. Es wird, **vor oder nach Schritt b., in jedem Fall aber nach Schritt d.,** eine Verschweißung zwischen der Membran und dem Kontaktelement ausgebildet.

Vorzugsweise vor Schritt d., gegebenenfalls aber auch nach Schritt d., wird Elektrolyt in den Gehäusebecher eindosiert.

Es ist bevorzugt, dass das Gehäuse in einem Schritt f. unter Ausbildung der oben im Zusammenhang mit der erfindungsgemäßen Energiespeicherzelle beschriebenen radialen Einbuchtung verschlossen wird.

Schritt e. kann grundsätzlich auch erst nach dem Verschluss in Schritt f. vorgenommen werden. Bevorzugt erfolgt Schritt e. aber vor Schritt f..

Das Verschließen des Gehäuses erfolgt bevorzugt unter radialem Umbiegen des die kreisförmige Öffnung definierenden Öffnungsrands über den von der Dichtung umschlossenen Rand der Deckelbaugruppe, so dass die Deckelbaugruppe einschließlich der Dichtung in der kreisförmigen Öffnung des Gehäusebechers formschlüssig fixiert wird.

Bevorzugt erfolgt das Einbringen der radialen Einbuchtung, um beim Umbiegen des Öffnungsrands einen axialen Druck von oben auf das Zellgehäuse ausüben zu können.

In weiteren bevorzugten Ausführungsformen wird die radiale Einbuchtung gebildet, wie es in Figur 8 A-C der EP 3916877 A1 beschrieben ist.

In bevorzugten Ausführungen werden zur Bildung der Deckelbaugruppe, vor oder nach Schritt b., auf dem Kontaktelement eine Membran, eine ringförmige Dichtung und eine Polkappe, insbesondere die oben im Zusammenhang mit der erfindungsgemäßen Zelle beschriebene Membran, Dichtung und Polkappe, nacheinander oder als vormontierte Baugruppe angeordnet.

Ein aus der zweiten Stirnseite des Elektroden-Separator-Verbunds austretender Stromkollektor kann am Boden des Gehäusebechers fixiert werden, beispielsweise mittels Verschweißung durch den Boden.

In besonders bevorzugten Ausführungsformen wird im Rahmen des Verfahrens in einem weiteren Schritt g. eine Höhenkalibrierung der herzustellenden Zelle vorgenommen. Diese kann insbesondere im Rahmen des Verschlussvorgangs (Schritt f.) oder unmittelbar im Anschluss an den Verschlussvorgang erfolgen. In diesem Zusammenhang ist der Überstand des aus der ersten endständigen Stirnseite des Elektroden-Separator-Verbunds austretende freie Randstreifen des Anodenstromkollektors oder des Kathodenstromkollektors von Bedeutung, da dieser durch axialen Druck deformierbar ist. So kann beispielsweise nach dem Schritt f. die Höhe der Zelle durch axialen Druck auf deren Deckelseite kalibriert werden. Hierbei kann es zu einer Stauchung des Überstands kommen. Dies ist insbesondere dann möglich, wenn das oben beschriebene elektrisch isolierende Material den Überstand vom elektrischen Potential des Gehäusebechers im Bereich der Einbuchtung elektrisch isoliert (vgl. auch Anspruch 6, Merkmal b.).

### KURZBESCHREIBUNG DER ZEICHNUNGEN

Weitere Merkmale und Vorteile der Erfindung ergeben sich aus den Ansprüchen und aus der nachfolgenden Beschreibung von bevorzugten Ausführungsbeispielen der Erfindung in Verbindung mit den Zeichnungen. Die einzelnen Merkmale können dabei jeweils für sich oder in Kombination miteinander verwirklicht sein.

In den Zeichnungen zeigen schematisch
- Figur 1: eine Ausführungsform einer erfindungsgemäßen Energiespeicherzelle in einer quergeschnittenen Gesamtansicht;
- Figur 2: die Ausführungsform der erfindungsgemäßen Energiespeicherzelle in einer quergeschnittenen Detailansicht;
- Figur 3: die Ausführungsform der erfindungsgemäßen Energiespeicherzelle in der quergeschnittenen Detailansicht mit einem auf einen Schweißpunkt zwischen Membran und Kontaktelement durch eine Öffnung in der Polkappe gerichteten Laserstrahl;
- Figur 4: einen Elektroden-Separator-Verbund, der Bestandteil einer erfindungsgemäßen Energiespeicherzelle ist, sowie dessen Komponenten.

### DETAILLIERTE BESCHREIBUNG DER AUSFÜHRUNGSBEISPIELE

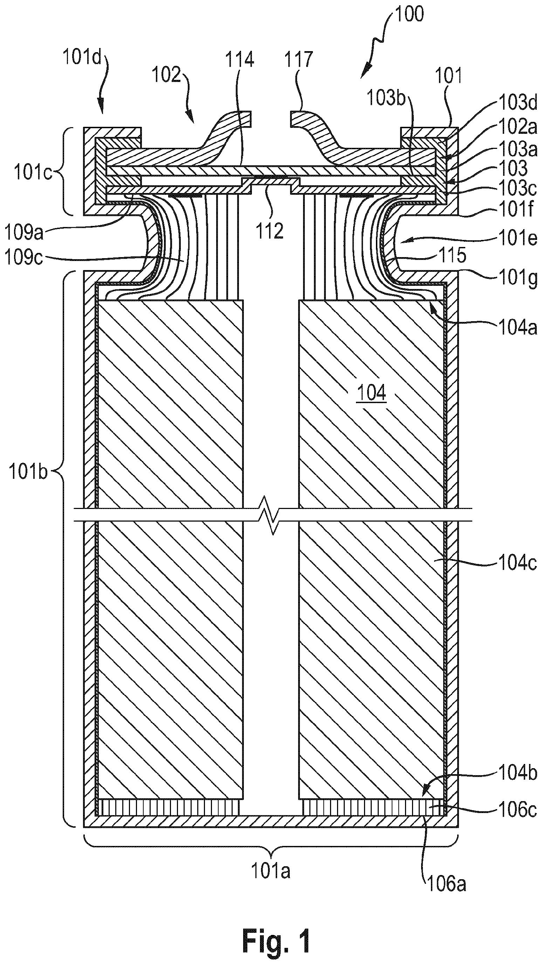

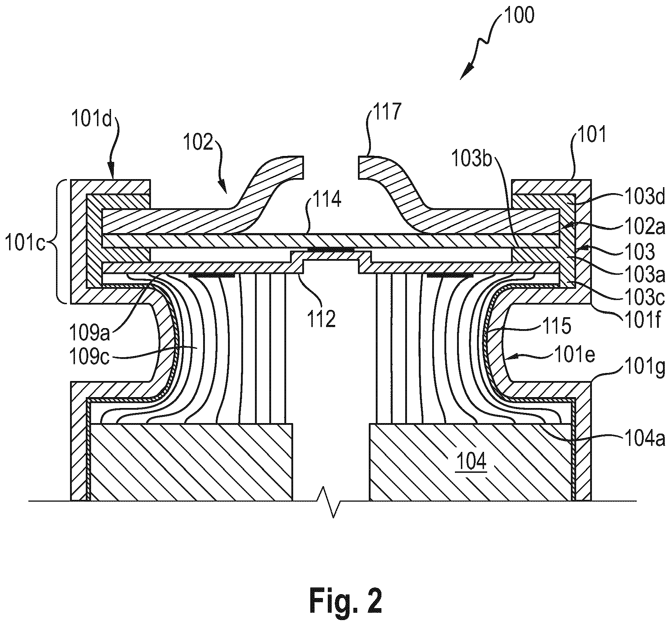

**Fig. 1** und **Fig. 2** zeigen eine erfindungsgemäße Energiespeicherzelle 100 mit einem luft- und flüssigkeitsdicht verschlossenen Gehäuse, das einen metallischen Gehäusebecher 101 mit einer endständigen kreisförmigen Öffnung und eine Deckelbaugruppe 102 mit einem kreisförmigen Rand 102a, welche die kreisförmige Öffnung verschließt, umfasst.

Die Deckelbaugruppe 102 umfasst weiterhin eine ringförmige Dichtung 103 aus einem elektrisch isolierenden Material, die ihren kreisförmigen Rand 102a umschließt und die den Gehäusebecher 101 und die metallischen Komponenten der Deckelbaugruppe 102 elektrisch voneinander isoliert.

Der Gehäusebecher 101 umfasst in axialer Abfolge einen Boden 101a, einen Zentralabschnitt 101b und einen Verschlussabschnitt 101c, wobei der Zentralabschnitt 101b zylindrisch ausgebildet ist. In dem Zentralabschnitt 101b liegt der Wickelmantel 104c des als Wickel ausgebildeten Elektroden-Separator-Verbunds 104 an der Innenseite des Gehäusebechers 101 an. In dem Verschlussabschnitt 101c steht die ringförmige Dichtung 103 in einem Presskontakt mit der Deckelbaugruppe 102 und der Innenseite des Gehäusebechers 101. Der Gehäusebecher 101 weist in dem Verschlussabschnitt 101c einen die kreisförmige Öffnung definierenden Öffnungsrand 101d auf, der radial nach innen über den von der Dichtung 103 umschlossenen Rand 102a der Deckelbaugruppe 102 umgebogen ist und der die Deckelbaugruppe 102 einschließlich der Dichtung 103 in der kreisförmigen Öffnung des Gehäusebechers 101 formschlüssig fixiert. Der Zentralabschnitt 101c und der Verschlussabschnitt 101d werden durch eine radiale Einbuchtung 101e, die die Außenseite des Gehäusebechers 101 ringförmig umläuft, voneinander getrennt.

Die Deckelbaugruppe 102 des vorliegenden Ausführungsbeispiels umfasst von innen nach außen ein scheibenförmiges Kontaktelement 112, eine kreisrunde metallische Membran 114, die sich ab einem definierten Überdruck innerhalb des Gehäuses nach außen wölbt oder birst, sowie eine Polkappe 117. Das Kontaktelement 112 ist mit der Membran 114 verschweißt, welche wiederum vorliegend mit einer Polkappe 117, die die Deckelbaugruppe 102 nach außen abschließt, verschweißt ist. Wölbt sich die Membran 114 in Folge eines Überdrucks, der über eine nicht dargestellte Durchbrechung im Kontaktelement unmittelbar auf die Membran 114 wirken kann, nach außen, bricht der elektrische Kontakt zwischen dem Kontaktelement 112 und der Membran 114 bzw. der Polkappe 117 ab. Bei sehr hohen Drücken kann die Membran 114 auch bersten.

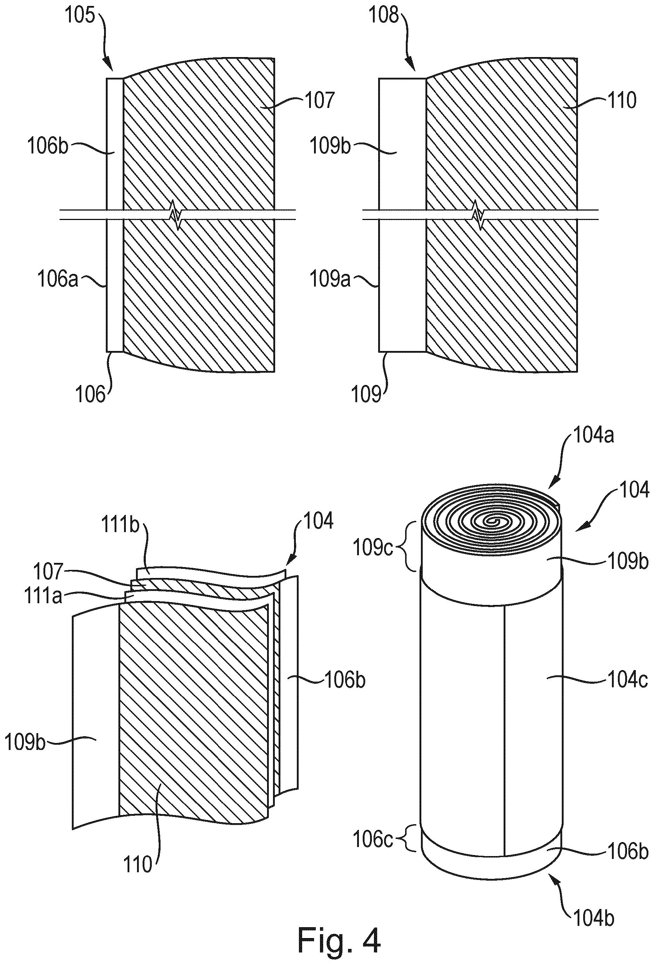

Der Elektroden-Separator-Verbund 104 weist eine erste endständige Stirnseite 104a und eine zweite endständige Stirnseite 104b mit einem dazwischenliegenden Wickelmantel 104c auf. Sein bevorzugter Aufbau geht aus **Fig. 4** hervor. Er umfasst die bandförmige Anode 105 mit dem bandförmigen Anodenstromkollektor 106 und die bandförmige Kathode 108 mit dem bandförmigen Kathodenstromkollektor 109. Bei dem Anodenstromkollektor 106 handelt es sich bevorzugt um eine Folie aus Kupfer oder Nickel. Bei dem Kathodenstromkollektor 109 handelt es sich bevorzugt um eine Aluminiumfolie. Sowohl der Anodenstromkollektor 106 als auch der Kathodenstromkollektor 109 weisen einen ersten Längsrand 106a, 109a und einen zweiten Längsrand, einen Hauptbereich 106b, 109b sowie einen freien Randstreifen 106c, 109c auf. Die Hauptbereiche 106b, 109b sind mit einer Schicht aus Elektrodenmaterial beladen, im Fall der Anode mit negativem Elektrodenmaterial, im Fall der Kathode mit positivem Elektrodenmaterial. Die freien Randstreifen 106c, 109c erstrecken sich entlang des jeweils ersten Längsrands und sind nicht mit Elektrodenmaterial beladen. Beide Elektroden sind einzeln in ungewickeltem Zustand dargestellt. Innerhalb des gewickelten Elektroden-Separator-Verbunds 104 sind die Anode und die Kathode versetzt zueinander angeordnet, dass der erste Längsrand 109a des Kathodenstromkollektors 109 aus der ersten endständigen Stirnseite 104a des Elektroden-Separator-Verbunds 104 austritt. Der erste Längsrand 106a des Anodenstromkollektors 106 tritt aus der zweiten endständigen Stirnseite 104b des Elektroden-Separator-Verbunds 104 aus. Dies ist in der Darstellung rechts unten gut zu erkennen. Die versetzte Anordnung geht aus der Darstellung links unten hervor. Dort sind auch die zwei bandförmigen Separatoren 111a und 111b dargestellt, die im Wickel die Elektroden 105 und 108 voneinander trennen. Der Wickelmantel 104c wird meist durch eine Kunststofffolie gebildet.

Zurück zu **Fig. 1** und **Fig. 2****:** Hier ist der freie Randstreifen 109c über den ersten Längsrand 109a des Kathodenstromkollektors 109 mit dem Kontaktelement 112 verschweißt und steht bevorzugt über seine gesamte Länge in unmittelbarem Kontakt mit dem Kontaktelement 112. Dieses deckt die erste endständige Stirnseite 104a des Elektroden-Separator-Verbunds 104 ab und liegt flach auf dem ersten Längsrand 109a des Kathodenstromkollektors 109 auf. Der erste Längsrand 106a des Anodenstromkollektors 106 ist dagegen unmittelbar mit dem Boden 101a des Gehäuses verschweißt und steht bevorzugt über seine gesamte Länge mit dem Boden 101a in unmittelbarem Kontakt.

Bei diesem Aufbau der Energiespeicherzelle 100 kann auf einen separaten Ableiter, der das Kontaktelement 112 mit einer Deckelbaugruppe verbindet, verzichtet werden.

Der Zentralabschnitt 101b und der Verschlussabschnitt 101c werden durch eine radiale Einbuchtung 101e, die die Außenseite des Gehäusebechers 101 ringförmig umläuft, voneinander getrennt. Der aus der ersten endständigen Stirnseite 104a austretende freie Randstreifen 109c ist breiter als der Abstand *d* zwischen dem Zentralabschnitt 101b und dem Verschlussabschnitt 101c, so dass der Randstreifen 109c den Abstand d überbrückt und in unmittelbaren Kontakt mit dem Kontaktelement 112 steht. Der Abstand d wird hierbei durch die Oberkante 101f und die Unterkante 101g definiert, die Anfang und Ende der Einbuchtung 101e markieren.

Da der als Wickel ausgebildete Elektroden-Separator-Verbund 104 breiter ist als der verfügbare Raum im Bereich der Einbuchtung 101e, ist der freie Randstreifen 109c des Kathodenstromkollektors 109 im Bereich der Einbuchtung 101e zur Mitte des Gehäusebechers 101 hin nach innen gedrückt. Damit es nicht zu Kurzschlüssen kommt, ist auf der Innenseite der Einbuchtung 101e ein elektrisch isolierendes Material 115 aufgebracht, das den freien Randstreifen 109c des Kathodenstromkollektors 109 vom elektrischen Potential des Gehäusebechers 101 elektrisch isoliert.

Die Energiespeicherzelle 100 weist typischerweise eine Höhe im Bereich von 60 mm bis 120 mm auf, ihr Durchmesser liegt bevorzugt im Bereich von 20 mm bis 50 mm. Der Gehäusebecher 101 weist in dem Zentralabschnitt 101b üblicherweise eine Wandstärke im Bereich von 0,1 mm bis 0,3 mm auf.

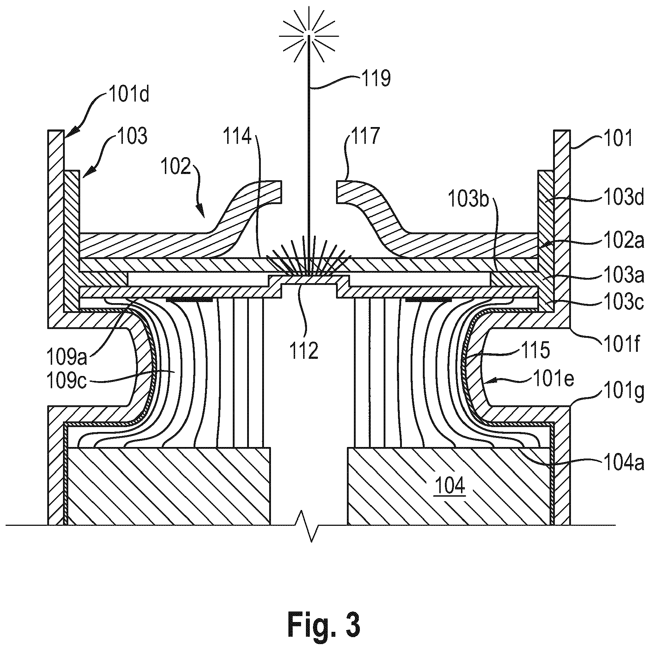

Die Darstellung der Energiespeicherzelle 100 in **Fig. 3** unterscheidet sich von denjenigen in den Figuren 1 und 2 lediglich darin, dass ein Laserstrahl 119 dargestellt ist, der durch eine Öffnung 117a in der Polkappe 117 gerichtet ist, um zwischen dem Kontaktelement 112 und der Membran 114 eine Verschweißung auszubilden.

## Patentansprüche

1. Energiespeicherzelle (100) mit den folgenden Merkmalen
a. Die Zelle (100) umfasst einen Elektroden-Separator-Verbund (104) mit der Sequenz Anode (105) / Separator (111a, 111b) / Kathode (108),
b. die Anode (105) des Elektroden-Separator-Verbunds (104) ist bandförmig ausgebildet und umfasst einen bandförmigen Anodenstromkollektor (106), der einen ersten Längsrand (106a) und einen dazu parallelen zweiten Längsrand aufweist,
c. der bandförmige Anodenstromkollektor (106) umfasst einen Hauptbereich (106b), der mit einer Schicht aus einem negativen Elektrodenmaterial (107) beladen ist, sowie einen freien Randstreifen (106c), der sich entlang seines ersten Längsrands (106a) erstreckt und der nicht mit dem negativen Elektrodenmaterial beladen ist,
d. die Kathode (108) des Elektroden-Separator-Verbunds (104) ist bandförmig ausgebildet und umfasst einen bandförmigen Kathodenstromkollektor (109), der einen ersten Längsrand (109a) und einen dazu parallelen zweiten Längsrand aufweist,
e. der bandförmige Kathodenstromkollektor (109) umfasst einen Hauptbereich (109b), der mit einer Schicht aus einem positiven Elektrodenmaterial (110) beladen ist, sowie einen freien Randstreifen (109c), der sich entlang seines ersten Längsrands (109a) erstreckt und der nicht mit dem positiven Elektrodenmaterial (110) beladen ist,
f. der Elektroden-Separator-Verbund (104) liegt in Form eines zylindrischen Wickels mit einer ersten endständigen Stirnseite (104a) und einer zweiten endständigen Stirnseite (104b) und einem dazwischen liegenden Wickelmantel (104c) vor und umfasst die Anode (105) und die Kathode (108) in spiralförmig aufgewickelter Form,
g. die Anode (105) und die Kathode (108) sind innerhalb des als Wickel ausgebildeten Elektroden-Separator-Verbunds (104) derart ausgebildet und/oder angeordnet, dass der freie Randstreifen (109c) des Kathodenstromkollektors (109) oder der freie Randstreifen (106c) des Anodenstromkollektors 106) aus der ersten endständigen Stirnseite (104a) austritt,
h. die Zelle (100) umfasst ein luft- und flüssigkeitsdicht verschlossenes Gehäuse, das einen Innenraum umschließt, in dem der Elektroden-Separator-Verbund (104) angeordnet ist, und das einen metallischen Gehäusebecher (101) mit einer endständigen kreisförmigen Öffnung und eine Deckelbaugruppe (102) mit einem kreisförmigen Rand (102a), welche die kreisförmige Öffnung verschließt, aufweist,
i. die Deckelbaugruppe (102) umfasst eine ringförmige Dichtung (103) aus einem elektrisch isolierenden Material, die ihren kreisförmigen Rand (102a) umschließt,
j. der Gehäusebecher (101) umfasst in axialer Abfolge einen Boden (101a), einen Zentralabschnitt (101b) und einen Verschlussabschnitt (101c), wobei
• der Zentralabschnitt (101b) zylindrisch ausgebildet ist und in dem Zentralabschnitt (101b) der Wickelmantel (104c) des als Wickel ausgebildeten Elektroden-Separator-Verbunds (104) mit der Innenseite des Gehäusebechers (101) in Kontakt steht, und
• in dem Verschlussabschnitt (101c) die ringförmige Dichtung (103) in einem Presskontakt mit der Deckelbaugruppe (102) und der Innenseite des Gehäusebechers (101) steht, und
k. die Deckelbaugruppe (102) umfasst von innen nach außen ein metallisches Kontaktelement (112), eine metallische Membran (114), die mit dem Kontaktelement (112) elektrisch gekoppelt ist und die sich ab einem definierten Überdruck innerhalb des Gehäuses nach außen wölbt oder birst, sowie eine metallische Polkappe (117), die mit der metallischen Membran (114) elektrisch gekoppelt ist,
**dadurch gekennzeichnet, dass**
l. der aus der ersten endständigen Stirnseite (104a) austretende freie Randstreifen (106c oder 109c) mit dem Kontaktelement (112) der Deckelbaugruppe (102) verschweißt ist.

2. Energiespeicherzelle nach Anspruch 1 mit mindestens einem der folgenden zusätzlichen Merkmale:
a. Die bandförmigen Elektroden (105, 108) sind innerhalb des als Wickel ausgebildeten Elektroden-Separator-Verbunds (104) derart ausgebildet und/oder angeordnet, dass einer der freien Randstreifen (106c, 109c) von Anodenstromkollektor und Kathodenstromkollektor aus der ersten endständigen Stirnseite (104a) und der andere der freien Randstreifen aus der zweiten endständigen Stirnseite (104b) des Elektroden-Separator-Verbunds (104) austritt.
b. Der aus der zweiten endständigen Stirnseite (104b) des Elektroden-Separator-Verbunds (104) austretende andere der freien Randstreifen ist mit dem Boden (101a) des Gehäusebechers (101) elektrisch gekoppelt.

3. Energiespeicherzelle nach einem der vorhergehenden Ansprüche mit mindestens einem der folgenden zusätzlichen Merkmale:
a. Die Membran (114) steht in unmittelbarem Kontakt mit dem Kontaktelement (112) und ist mit diesem durch Verschweißung verbunden.
b. Die Membran (114) ist kreisförmig ausgebildet und weist somit einen kreisförmigen Rand auf.
c. Das Kontaktelement (112) ist kreisförmig ausgebildet und weist somit einen kreisförmigen Rand auf.
d. Das Kontaktelement (112) ist an das Zentrum der Membran (114) geschweißt.
e. Das Kontaktelement (112) und die Membran (114) weisen näherungsweise den gleichen Durchmesser auf.
f. Die Membran (114) und das Kontaktelement (112) stehen ausschließlich über einen Verschweißungsbereich im Zentrum der Membran (114) miteinander in elektrischem Kontakt.

4. Energiespeicherzelle nach einem der vorhergehenden Ansprüche mit mindestens einem der folgenden zusätzlichen Merkmale:
a. Die ringförmige Dichtung (103) umschließt den kreisförmigen Rand des Kontaktelements (112).
b. Die ringförmige Dichtung (103) umschließt den kreisförmigen Rand der Membran (114).
c. Die ringförmige Dichtung (103) trennt den kreisförmigen Rand der Membran (114) vom kreisförmigen Rand des Kontaktelements (112).

5. Energiespeicherzelle nach einem der vorhergehenden Ansprüche mit mindestens einem der folgenden zusätzlichen Merkmale:
a. Der Zentralabschnitt (101b) und der Verschlussabschnitt (101c) werden durch eine radiale Einbuchtung (101e), die die Außenseite des Gehäusebechers (101) ringförmig umläuft, voneinander getrennt.
b. Der aus der ersten endständigen Stirnseite (104a) austretende freie Randstreifen (106c oder 109c) ist breiter als der Abstand d zwischen dem Zentralabschnitt (101b) und dem Verschlussabschnitt (101c), so dass der Randstreifen (106c oder 109c) den Abstand d überbrückt und in unmittelbaren Kontakt mit dem Kontaktelement (112) steht.
c. Der Abstand d wird durch eine Oberkante (101f) und eine Unterkante (101g) der Einbuchtung (101e) des Gehäusebechers (101) definiert.

6. Energiespeicherzelle nach Anspruch 5 mit mindestens einem der folgenden zusätzlichen Merkmale:
a. Der aus der ersten endständigen Stirnseite (104a) des Elektroden-Separator-Verbunds (104) austretende freie Randstreifen ist im Bereich der Einbuchtung (101e) des Gehäusebechers (101) zur Mitte des Gehäusebechers (101) hin nach innen gedrückt.
b. Im Bereich der Einbuchtung (101e) ist zwischen der Innenseite des Gehäusebechers (101) und dem aus der ersten endständigen Stirnseite (104a) des Elektroden-Separator-Verbunds (104) austretenden freien Randstreifen ein elektrisch isolierendes Material (115) angeordnet, das den freien Randstreifen vom elektrischen Potential des Gehäusebechers (101) elektrisch isoliert.

7. Energiespeicherzelle nach einem der vorhergehenden Ansprüche mit mindestens einem der folgenden zusätzlichen Merkmale:
a. Der Gehäusebecher (101) weist in dem Zentralabschnitt (101b) und dem Verschlussabschnitt (101c) einen identischen maximalen Außendurchmesser auf.
b. Im Bereich der Einbuchtung (101e) ist der Außendurchmesser des Gehäusebechers (101) um das 4- bis 20-fache der Wandstärke des Gehäusebechers (101) in diesem Bereich reduziert.

8. Energiespeicherzelle nach einem der vorhergehenden Ansprüche mit mindestens einem der folgenden zusätzlichen Merkmale:
a. Der Längsrand (106a, 109a) entlang dem sich der aus der ersten endständigen Stirnseite (104a) des Elektroden-Separator-Verbunds (104) austretende freie Randstreifen erstreckt, bildet eine Fläche, auf der das Kontaktelement (112) flach aufliegt oder in die das Kontaktelement (112) eingepresst ist.
b. Das Kontaktelement (112) ist derart dimensioniert, dass es mindestens 40 %, bevorzugt mindestens 60 %, besonders bevorzugt mindestens 80 % der ersten endständigen Stirnseite (104a) abdeckt.
c. Das Kontaktelement (112) ist eine Scheibe oder eine polygonale Platte.
d. Das Kontaktelement (112) weist mindestens eine Durchbrechung, insbesondere mindestens ein Loch und/oder mindestens einen Schlitz, auf.
e. Das Kontaktelement (112) weist eine bevorzugt gleichmäßige Dicke im Bereich von 50 µm bis 600 µm, bevorzugt im Bereich von 150 µm bis 350 µm, auf.
f. Das Kontaktelement (112) weist zwei sich gegenüberliegende Flachseiten auf und erstreckt sich im Wesentlichen nur in einer Dimension.
g. Das Kontaktelement (112) weist mindestens eine Sicke auf, die auf einer Flachseite des Kontaktelements (112) als längliche Vertiefung und auf der gegenüberliegenden Flachseite als längliche Erhöhung zu Tage tritt, wobei das Kontaktelement (112) mit der Flachseite, welche die längliche Erhöhung trägt, in die Fläche, die von dem Längsrand (106a, 109a) gebildet wird, eingepresst ist.
h. Das Kontaktelement (112) ist im Bereich der Sicke mit dem Längsrand (106a, 109a) des jeweiligen Stromkollektors verschweißt, insbesondere über eine oder mehrere in der Sicke angeordnete Schweißnähte.

9. Energiespeicherzelle nach einem der vorhergehenden Ansprüche mit dem folgenden zusätzlichen Merkmal:
a. In der Mitte und/oder am Rand der Polkappe (117) ist eine oder sind mehrere Öffnungen (117a) ausgebildet.

10. Verfahren zur Herstellung einer Energiespeicherzelle mit den Merkmalen eines der Ansprüche 1 bis 9 mit den Schritten:
a. Es werden ein Gehäusebecher mit einer kreisförmigen Öffnung und ein Elektroden-Separator-Verbund mit einer ersten und einer zweiten Stirnseite, wie in Anspruch 1 definiert, bereitgestellt.
b. Der Elektroden-Separator-Verbund wird, mit der zweiten Stirnseite voran, durch die kreisförmige Öffnung des Gehäusebechers in den Gehäusebecher eingeschoben.
c. Vor oder nach Schritt b. wird auf der ersten Stirnseite ein metallisches Kontaktelement angeordnet und durch Verschweißung fixiert.
d. Zur Bildung der Deckelbaugruppe werden auf das Kontaktelement eine Membran und eine Polkappe aufgesetzt.
e. Es wird eine Verschweißung zwischen der Membran und dem Kontaktelement ausgebildet.
